# EUROPEAN PATENT APPLICATION

(11) **EP 4 821 621 A1**
(43) Date of publication of application: **14.10.2026**
(21) Application number: 24900305.4
(22) Date of filing: 17.10.2024
(51) Int. Cl.: B23B 19/02

(54) **TOOL BASE AND MACHINE TOOL**

(30) Priority: 08.12.2023 JP 2023207519
(71) Applicant: Citizen Machinery Co., Ltd., Nagano 389-0206 (JP)
(72) Inventor: KOTAKE, Kyota, Kitasaku-gun, Nagano 389-0206 (JP)
(74) Representative: Louis Pöhlau Lohrentz
(86) International application number: PCT/JP2024/036992
(87) International publication number: WO 2025/121009

(57) **Abstract**

When a tool is mounted on a tool base capable of rotating a tool via a gear train having backlash and is used in a stopped state, in order to prevent play of the tool due to the backlash without complicating a structure, the tool base includes a spindle (33) that is configured to detachably hold a cutting tool (85) in an axis (C3) direction, a gear train (32) that is configured to transmit rotation to the cutting tool (85) held by the spindle (33), a drawbar (34) that is configured to move the cutting tool (85) in the axis (C3) direction, and a piston (36) that is provided to be movable in the axis (C3) direction between a rearmost position and a foremost position. The piston (36) and the drawbar (34) are formed with a coupling (uneven shapes (36c, 34c)) that is configured to rotate integrally in a state where the piston (36) and the drawbar (34) are in contact with each other. The piston (36) is stopped at an intermediate position between the rearmost position and the foremost position.

## Description

### [Technical Field]

The present invention relates to a tool base and a machine tool including the tool base.

### [Background Art]

There is known a tool base including a tool holding portion that is rotatably provided and that detachably holds a rotary tool that machines a workpiece by rotation, and there is also known a machine tool including the tool base. The rotary tool machines a predetermined workpiece by rotationally driving the tool holding portion with the rotary tool mounted thereon.

In this machine tool, the tool base includes a drawbar as an attachment/detachment operation portion for the rotary tool. The drawbar is provided to be integral with the tool holding portion in a rotational direction and to be movable forward and rearward in a rotational axis direction relative to the tool holding portion. The tool base also includes a piston as an operation drive portion for driving the drawbar to move forward and rearward. The rotary tool can be removed from the tool holding portion and a tool can be replaced by pressing the drawbar with the piston to move the drawbar (for example, see Patent Literature 1).

### [Prior Art Documents]

### [Patent Literature]

[Patent Literature 1] Japanese Patent Application Publication No. H7-040104

### [Summary of Invention]

### [Problem to be solved]

This machine tool may require fixing a rotational position of the tool in the tool mounting portion by restricting the rotation of the tool holding portion. For example, when a fixed tool such as a turning tool is mounted on the tool holding portion instead of the rotary tool to perform contouring or boring on a rotating workpiece without rotating the fixed tool, or when the rotary tool is held while maintaining a phase, such fixing may be required. However, there is a problem in that fixing the rotational position of the tool in the tool mounting portion is not easy.

The present invention has been made in view of the above-mentioned situation. The object of the present invention is to provide a tool base capable of preventing displacement of the rotational position of a tool held by a tool holding portion using a simple structure, as well as a machine tool including the tool base.

### [Solution to Problem]

According to a first aspect of the present invention, there is provided a tool base. The tool base includes a tool holding portion that is configured to detachably hold a tool for machining a workpiece, the tool holding portion being rotatable about an axis of the tool; an attachment/detachment operation portion that is provided to be integral with the tool holding portion in a rotational direction about the axis and to be movable forward and rearward in an axial direction of the tool relative to the tool holding portion; and an operation drive portion that is configured to drive the attachment/detachment operation portion to move forward and rearward. The tool machines the workpiece by rotationally driving the tool holding portion with the tool mounted thereon. The tool is removable from the tool holding portion by pressing the attachment/detachment operation portion with the operation drive portion to move the attachment/detachment operation portion in the axial direction. A movement range of the operation drive portion includes a position at which the operation drive portion is in contact with the attachment/detachment operation portion to prevent rotation of the attachment/detachment operation portion.

According to a second aspect of the present invention, there is provided a machine tool. The machine tool includes a main spindle that is configured to grip a workpiece; the tool base according to the present invention; and a control portion that is configured to control the main spindle and the tool base. The control portion is further configured to stop the operation drive portion at a position separated from the attachment/detachment operation portion, at a position at which the tool is attachable to and detachable from the tool holding portion, and at a position at which the operation drive portion is in contact with the attachment/detachment operation portion to prevent rotation of the attachment/detachment operation portion.

### [Effects of Invention]

The tool base and the machine tool including such tool base according to the present invention can easily prevent rotation of a tool mounting portion and fix the tool mounting portion without complicating the structure by bringing the operation drive portion into contact with the attachment/detachment operation portion so as to maintain the attachment/detachment operation portion in a state where holding of the tool is maintained. Thus, for example, when a workpiece is machined by stopping the tool, it is possible to prevent the displacement of the rotational position of the tool, thereby preventing the lowering of machining precision and other adverse effects. Furthermore, it becomes possible to maintain the rotational phase of the tool to be rotated as necessary during machining.

### [Brief Description of Drawings]

[FIG. 1] FIG. 1 is a schematic perspective view of an automatic lathe.
[FIG. 2] FIG. 2 is a perspective view of the interior of the automatic lathe as seen from a machining chamber side.
[FIG. 3A] FIG. 3A is a sectional view showing a section of a tool spindle taken by a vertical plane including an axis C3, illustrating a state where a piston is at the foremost position.
[FIG. 3B] FIG. 3B is a detailed partial view showing an area A in FIG. 3A.
[FIG. 4A] FIG. 4A is a sectional view showing the section of the tool spindle taken by the vertical plane including the axis C3, illustrating a state where the piston is at an intermediate position.
[FIG. 4B] FIG. 4B is a detailed partial view showing the area A in FIG. 4A.
[FIG. 5A] FIG. 5A is a sectional view showing the section of the tool spindle taken by the vertical plane including the axis C3, illustrating a state where the piston is at the rearmost position.
[FIG. 5B] FIG. 5B is a detailed partial view showing the area A in FIG. 5A.
[FIG. 6] FIG. 6 is a sectional view taken by a vertical plane along the line B-B in FIG. 3A.
[FIG. 7] FIG. 7 is a sectional view taken by a vertical plane along the line C-C in FIG. 3B.
[FIG. 8] FIG. 8 is a perspective view schematically showing an uneven shape formed on the front surface of the piston.
[FIG. 9A] FIG. 9A is a side view schematically showing the uneven shape of the piston and that of a drawbar, illustrating a state where the front surface of the piston and a rear end surface of the drawbar are separated from each other.
[FIG. 9B] FIG. 9B is a side view schematically showing the uneven shape of the piston and that of the drawbar, illustrating a state where the uneven shape of the piston and that of the drawbar are meshed with each other by the contact between the front surface of the piston and the rear end surface of the drawbar.

### [Detailed Description of Embodiments]

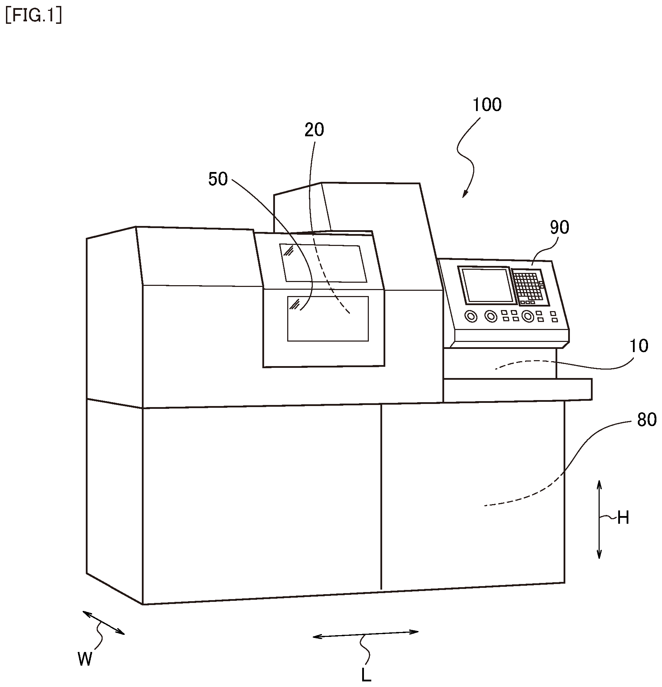

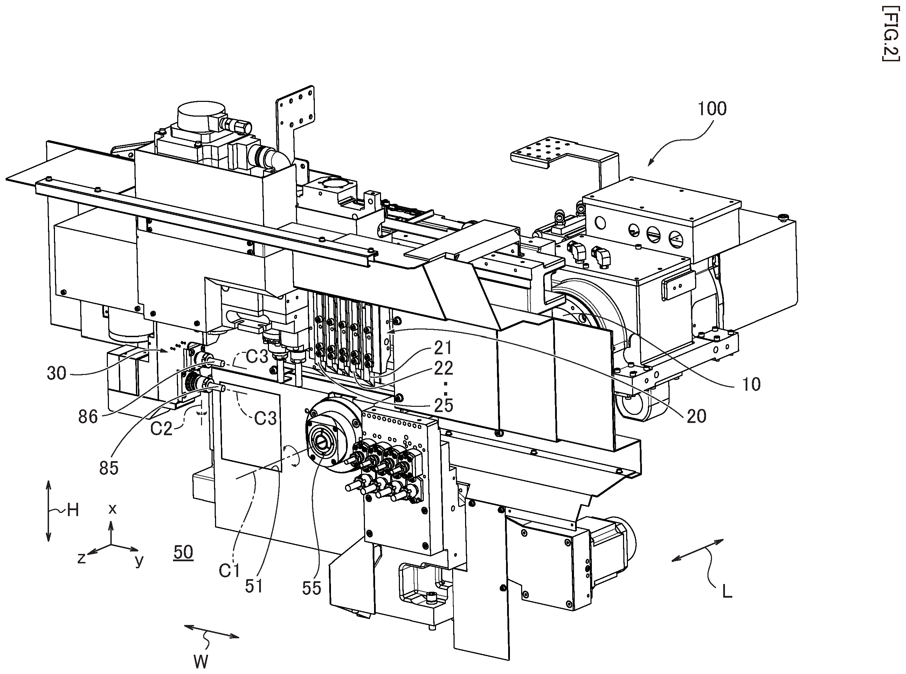

An automatic lathe 100 shown in FIG. 1 is one embodiment of a machine tool according to the present invention. As shown in FIG. 2, the automatic lathe 100 includes, inside a cover, a main spindle 10, a gang-type tool post 20, and a tool spindle 30 that is one example of a tool base according to the present invention.

In the automatic lathe 100, based on an operation of a control panel 90, a control portion 80 accommodated inside the cover below the control panel 90 controls operations of the main spindle 10, the gang-type tool post 20, and the tool spindle 30.

The main spindle 10 is supported to be movable in a z-axis direction parallel to an axis C1 and is rotationally driven about the axis C1.

A guide bush support base 51 disposed in front of the main spindle 10 and a guide bush 55 is provided on the guide bush support base 51. A front end side of a workpiece gripped by the main spindle 10 extends from the guide bush 55 into a machining chamber 50.

The gang-type tool post 20 and the tool spindle 30 are disposed in the machining chamber 50. The gang-type tool post 20 supports a plurality of tools 21, 22, ..., and 25.

As the gang-type tool post 20 moves along a y-axis perpendicular to a z-axis, the automatic lathe 100 selects one of the tools 21, ..., and 25 used for machining. As the gang-type tool post 20 moves along an x-axis perpendicular to both the z-axis and the y-axis, the selected tool 21, ..., or 25 performs turning on the workpiece.

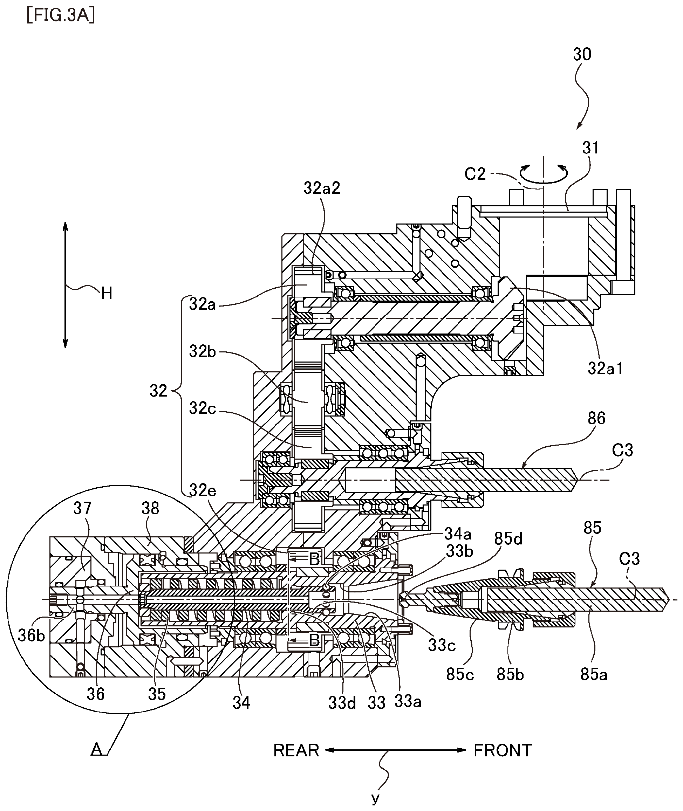

As shown in FIG. 3A, the tool spindle 30 is provided with a rotary tool 86 and a cutting tool 85 integrally mounted on a holder. The rotary tool 86 is detachably inserted into a tool drive shaft rotatably supported in a main body of the tool spindle 30. The cutting tool 85 is detachably mounted on a spindle 33 that is rotatably supported about an axis C3 below the tool drive shaft.

As the tool spindle 30 moves along the x-axis, one of the cutting tool 85 and the rotary tool 86 can be selected as a tool used for machining a workpiece. As the tool spindle 30 moves along the y-axis, the selected cutting tool 85 or rotary tool 86 can machine the workpiece.

The tool spindle 30 is rotatable about an axis C2 parallel to an x-axis, and the cutting tool 85 or the rotary tool 86 can machine a workpiece in a posture inclined with respect to the y-axis.

The control portion 80 is configured to control the movement of the tool spindle 30 along the x-axis, the movement along the y-axis, the rotation about the axis C2, and the rotation of the cutting tool 85 and the rotary tool 86 about the axis C3.

As shown in FIGS. 3A, 4A, and 5A, in the tool spindle 30, a rotational driving force is input to a gear 32a via a bevel gear 32a1 that meshes with a drive gear (not shown) inserted into an interior through an upper opening 31, and a gear 32b is driven to rotate via a spur gear 32a2. The gear 32b meshes with a gear 32c integrally provided on the tool drive shaft, and the gear 32c meshes with a gear 32e via a gear (not shown), and the rotation of the gear 32b is sequentially transmitted from the gear 32c to the gear 32e.

A rotational driving force transmitted to the gear 32c rotates the tool drive shaft, and the rotary tool 86 is driven to rotate. The gear 32e is integrally mounted on the spindle 33 (one example of a tool holding portion).

The spindle 33 is a tool holding portion that detachably holds the cutting tool 85 along an axis C3 direction and rotatably holds the cutting tool 85 about the axis C3. The cutting tool 85 is configured such that a tool body 85a is integrally gripped by a collet chuck with a holder 85b. A pull stud 85d is integrally provided on the holder 85b. The pull stud 85d protrudes from a side opposite to the tool body 85a.

The holder 85b is formed in a conical shape. The spindle 33 includes a tapered hole on an inner side thereof. When the holder 85b is inserted into the hole of the spindle 33, a sloped surface 85c of the holder 85b comes into contact with an inner peripheral surface 33a of the hole and is brought into close contact therewith, and the cutting tool 85 is mounted on the spindle 33.

The hole of the spindle 33 includes a groove 33b over an entire circumference on a deeper portion than the inner peripheral surface 33a having the taper. The groove 33b has an inner diameter larger than a minimum inner diameter portion of the taper. The hole of the spindle 33 further includes a ball pressing portion 33c as an inner peripheral surface on a deeper portion than the groove 33b. The ball pressing portion 33c has an inner diameter smaller than the inner diameter of the groove 33b.

A drawbar 34 (one example of the attachment/detachment operation portion) is arranged inside the spindle 33 to be movable forward and rearward along the axis C3. The drawbar 34 includes, at a front end thereof, a plurality of balls 34a that engage, from an outside, with the pull stud 85d provided on the holder 85b. A coil spring 35 is provided on an outer side of the drawbar 34.

The coil spring 35 is provided between a stopper provided integrally at a rear end of the drawbar 34 and a stepped portion formed in the hole of the spindle 33. The drawbar 34 is biased rearward by the coil spring 35. The drawbar 34 is restricted from moving rearward beyond a predetermined range by abutting against a stopper 33d formed on the spindle 33.

As shown in FIG. 3A, when the balls 34a face the groove 33b of the spindle 33 against the biasing force of the coil spring 35, the balls 34a are displaced, at a front end of the drawbar 34, from an inner side to the groove 33b on an outer side in a radial direction. This allows the attachment and detachment of the pull stud 85d with respect to the inner side at the front end of the drawbar 34.

When the holder 85b is inserted into the hole of the spindle 33 to attach the cutting tool 85 to the spindle 33 in a state where the balls 34a are displaced, at the front end of the drawbar 34, from the inner side to the groove 33b on the outer side in the radial direction, the pull stud 85d is inserted into the inner side of the drawbar 34 at the front end thereof.

When the cutting tool 85 is attached to the spindle 33 and the drawbar 34 moves rearward by the biasing force of the coil spring 35, the balls 34a of the drawbar 34 move from the position facing the groove 33b to the position facing the ball pressing portion 33c. The balls 34a, which are pressed inward in the radial direction by the ball pressing portion 33c, partially protrude into the inner side at the front end of the drawbar 34 and engage with the pull stud 85d. The holder 85b of the cutting tool 85 is integrally held by the spindle 33, and the cutting tool 85 becomes rotatable integrally with the spindle 33.

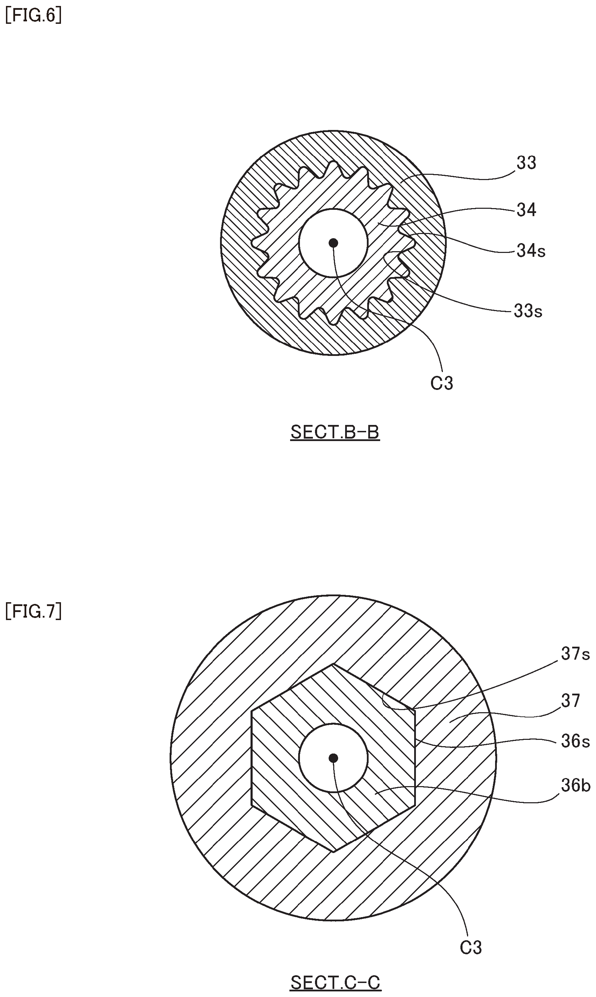

As shown in FIG. 6, a spline 34s of the drawbar 34 and a spline 33s of an inner peripheral surface of the spindle 33 are meshed with each other, such that the drawbar 34 is movable along the axis C3 relative to the spindle 33 and is restricted from rotating about the axis C3.

A cylinder 38 is formed in a main body of the tool spindle 30. The cylinder 38 is provided on an outer peripheral of the spindle 33 at a rear of the spindle 33. A piston 36 (one example of the operation drive portion) is provided in the cylinder 38 to be movable forward and rearward along the axis C3. A rod portion 36b protruding rearward of the piston 36 passes through a through hole formed in a seal receiving member 37 of the main body of the tool spindle 30, and the piston 36 moves forward and rearward along the axis C3. The piston 36 drives the drawbar 34 to move forward and rearward.

As shown in FIG. 7, an outer peripheral surface 36s of the rod portion 36b is formed in a hexagonal sectional contour shape. A through hole of the seal receiving member 37 is formed as a hexagonal hole having an inner peripheral surface 37s of a hexagonal sectional contour shape corresponding to the sectional contour shape of the rod portion 36b. The rod portion 36b is movable along the axis C3 relative to the seal receiving member 37 and is restricted from rotating about the axis C3. The movement of the piston 36 is performed in a state where the rotation of the piston 36 about the axis C3 is restricted.

The piston 36 can be moved forward by supplying an operating fluid such as air, under the control of the control portion 80, to a compartment in the cylinder 38 on a left side of the piston 36 in the drawings. The piston 36 can be moved rearward by supplying the operating fluid such as air, under the control of the control portion 80, to a compartment in the cylinder 38 on a right side of the piston 36 in the drawings.

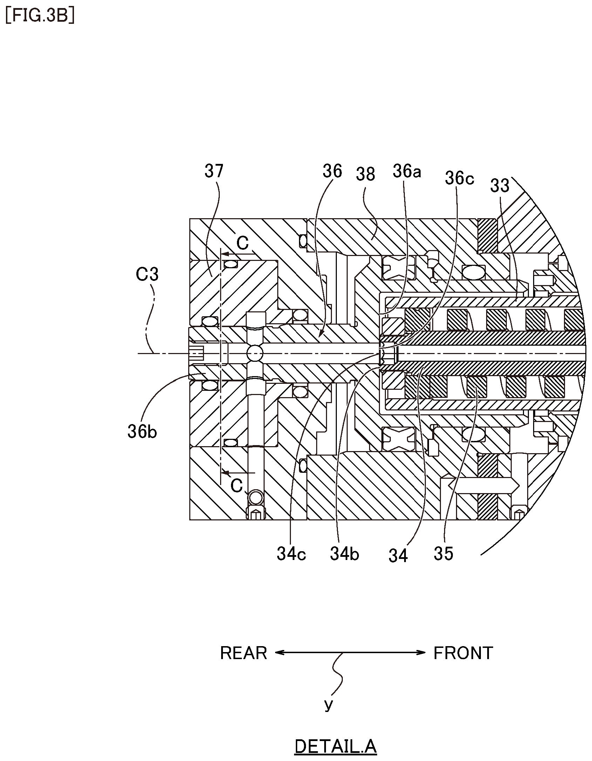

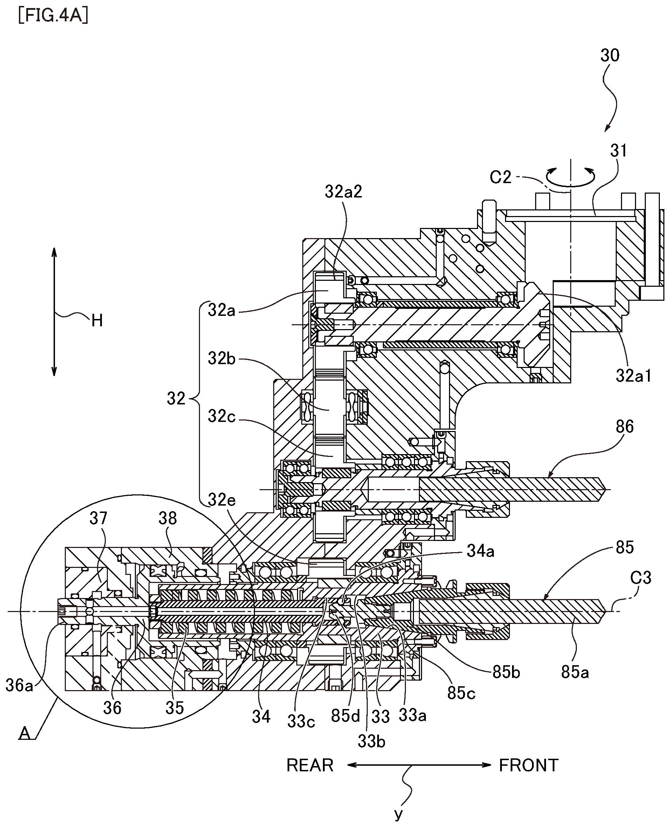

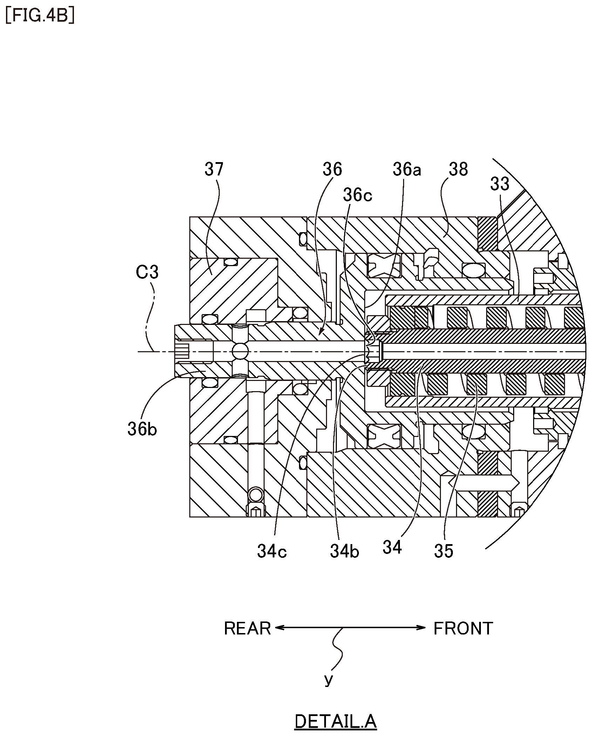

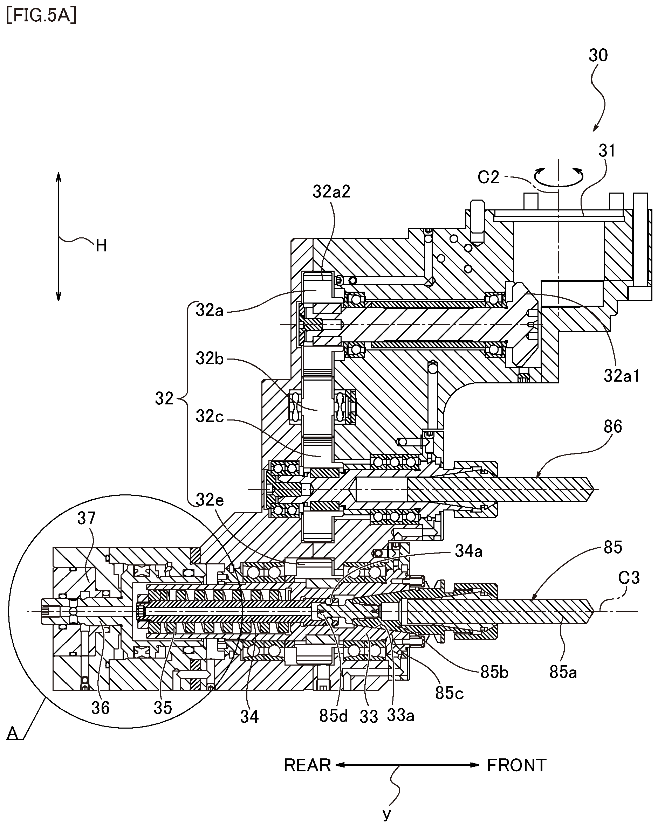

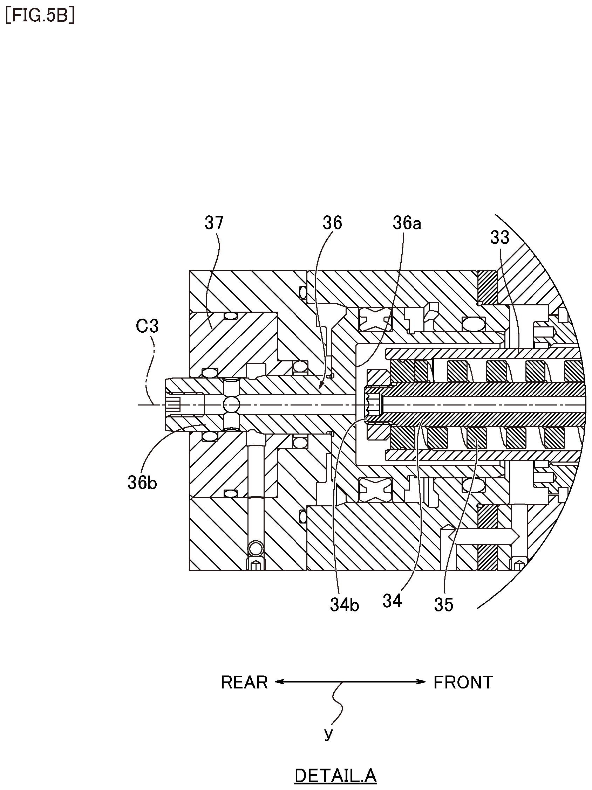

The piston 36 is movable, under the control of the control portion 80, within a range between a rearmost position shown in FIGS. 5A and 5B and a foremost position shown in FIGS. 3A and 3B. The piston 36 is controlled by the control portion 80 to stop at a predetermined intermediate position shown in FIGS. 4A and 4B within the range between the rearmost position and the foremost position.

In a state where the piston 36 is disposed at the rearmost position, a front surface 36a of the piston 36 is spaced rearward from a rear end surface 34b of the drawbar 34. At the rearmost position of the piston 36, the cutting tool 85 is held on the spindle 33 by the drawbar 34, and the cutting tool 85 can be rotated or stopped by the spindle 33.

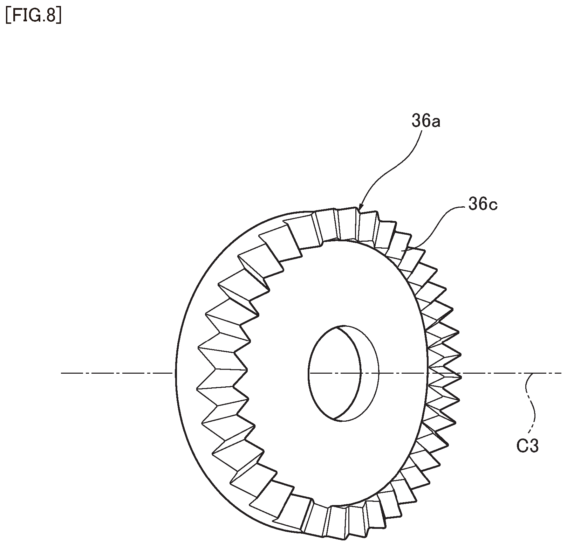

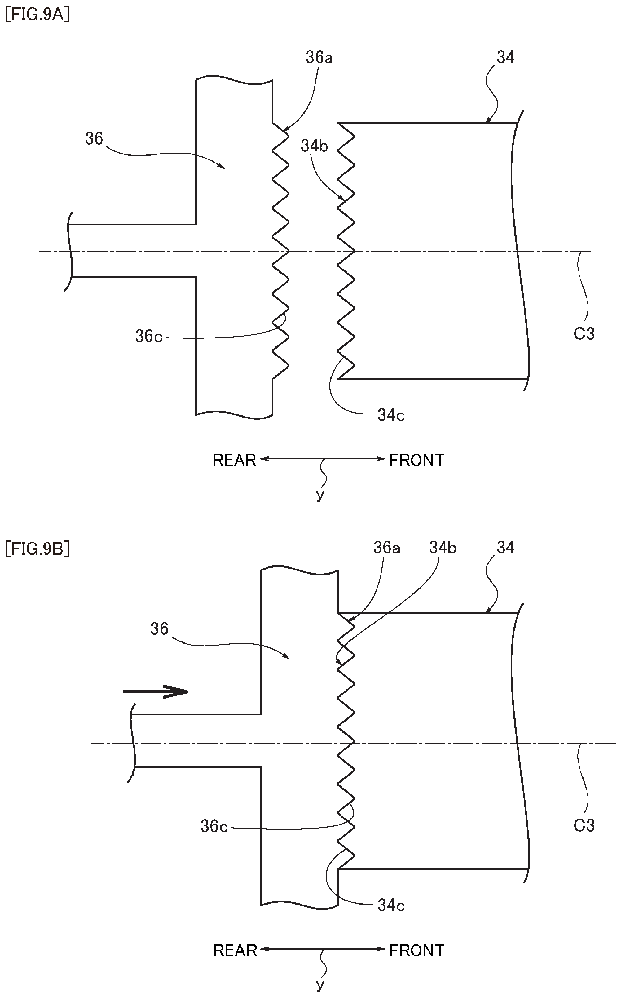

As shown in FIG. 8, a front surface 36a of the piston 36 facing the rear end surface 34b of the drawbar 34 is formed with recess portions and projection portions. Each of the recess portions and the projection portions extends radially about the axis C3. The recess portions and the projection portions are alternately arranged at equal intervals along a circumferential direction about the axis C3, thereby forming an uneven shape 36c. As shown in FIGS. 9A and 9B, a rear end surface 34b of the drawbar 34 facing the front surface 36a of the piston 36 is formed with an uneven shape 34c corresponding to the uneven shape 36c.

The uneven shape 36c of the piston 36 and the uneven shape 34c of the drawbar 34 engage with each other.

When the piston 36 advances from the rearmost position shown in FIGS. 5A and 5B to the intermediate position shown in FIGS. 4A and 4B, the front surface 36a of the piston 36 comes into contact with the rear end surface 34b of the drawbar 34, and the uneven shape 36c and the uneven shape 34c engage with each other as shown in FIG. 9B.

When the uneven shape 36c of the piston 36 and the uneven shape 34c of the drawbar 34 engage with each other, the piston 36 and the drawbar 34 are coupled about the axis C3. At the intermediate position, the piston 36 does not press the drawbar 34 and does not move the drawbar 34 in the axis C3 direction, and the drawbar 34 is stopped relative to the spindle 33 without moving forward and rearward. The spindle 33 maintains holding of the cutting tool 85, and the cutting tool 85 maintains a rotational position.

At the intermediate position, the piston 36 may press the drawbar 34 to move the drawbar 34 within a range in which the spindle 33 maintains holding of the cutting tool 85.

The control portion 80 controls the piston 36 to move forward and to stop at the foremost position, and the piston 36 presses the drawbar 34 to move the drawbar 34 to a position allowing attachment and detachment of the pull stud 85d, thereby allowing the holder 85b to be attached to and detached from the spindle 33 and the cutting tool 85 to be attached and detached.

When the automatic lathe 100 machines a workpiece rotating about the axis C1 in a state where the cutting tool 85 is stopped without rotation, the control portion 80 stops a drive source, such as a motor, that rotationally drives the gear train 32, or prevents the rotation from being transmitted to a drive gear (not shown) connected to the gear train 32.

Even in a state where transmission of driving force to the drive gear is stopped to stop rotational driving of the spindle 33, a displacement in a rotational direction, which may occur due to factors such as backlash between the connected gears 32a, 32b, 32c, and 32e, is prevented by moving the piston 36 to the intermediate position, and the cutting tool 85 is fixed while the displacement in the rotational direction is prevented.

For example, when a fixed tool such as a turning tool that machines a workpiece without rotation is attached as the tool body 85a of the cutting tool 85 to machine the workpiece rotating about the axis C1, displacement of a cutting edge of the tool body 85a from a preset position due to friction with the rotating workpiece or occurrence of vibration called chatter due to fluctuation of friction is prevented. As a result, it is possible to prevent lowering of machining precision in boring of the workpiece and contouring of an outer peripheral surface of the workpiece.

As described above, in a case where the automatic lathe 100 of the present embodiment is used with a fixed tool attached as the tool body 85a to the tool spindle 30 and with the spindle 33 stopped, it is possible to prevent displacement in the rotational direction of the tool body 85a and to prevent the cutting edge of the tool body 85a from moving by a simple structure in which the front surface 36a of the piston 36 and the rear end surface 34b of the drawbar 34 are brought into contact with each other, and by simple control in which the control portion 80 stops the piston 36 at a predetermined position (intermediate position) set within the range between the rearmost position and the foremost position.

It is also possible to form uneven shapes 36c, 34c serving as couplings on the front surface 36a of the piston 36 and the rear end surface 34b of the drawbar 34, and to bring the uneven shapes 36c, 34c into engagement so that the front surface 36a of the piston 36 and the rear end surface 34b of the drawbar 34 are brought into contact with each other.

Instead of forming the uneven shapes 36c, 34c on the front surface 36a of the piston 36 and the rear end surface 34b of the drawbar 34, respectively, it is also possible to bring the front surface 36a of the piston 36 and the rear end surface 34b of the drawbar 34 into contact with each other in a high-friction state by forming each of the front surface 36a and the rear end surface 34b to have a high friction coefficient or by providing members having a high friction coefficient thereon.

### [Cross-Reference to Related Application]

This application claims priority based on Japanese Patent Application No. 2023-207519 filed on December 8, 2023, and the entire disclosure thereof is incorporated herein by reference.

## Claims

1. A tool base, comprising:
a tool holding portion that is configured to detachably hold a tool for machining a workpiece, the tool holding portion being rotatable about an axis of the tool;
an attachment/detachment operation portion that is provided to be integral with the tool holding portion in a rotational direction about the axis and to be movable forward and rearward in an axial direction of the tool relative to the tool holding portion; and
an operation drive portion that is configured to drive the attachment/detachment operation portion to move forward and rearward,
wherein the tool machines the workpiece by rotationally driving the tool holding portion with the tool mounted thereon, and the tool is removable from the tool holding portion by pressing the attachment/detachment operation portion with the operation drive portion to move the attachment/detachment operation portion in the axial direction; and
wherein a movement range of the operation drive portion comprises a position at which the operation drive portion is in contact with the attachment/detachment operation portion to prevent rotation of the attachment/detachment operation portion.

2. The tool base according to claim 1, wherein the operation drive portion and the attachment/detachment operation portion respectively comprise surfaces that are brought into contact with each other and are formed with uneven shapes, the uneven shapes being interlocked with each other when the operation drive portion and the attachment/detachment operation portion are in contact with each other.

3. The tool base according to claim 2, wherein each of the uneven shapes comprises recess portions and projection portions each extending radially about an axis of the operation drive portion and the attachment/detachment operation portion, and the recess portions and the projection portions are alternately arranged at equal intervals along a circumferential direction about the axis.

4. The tool base according to claim 1, wherein a sectional contour shape of an outer peripheral surface of a rod portion of the operation drive portion and a sectional contour shape of an inner peripheral surface of a seal receiving member through which the rod portion passes are configured to allow the operation drive portion to move along the axial direction and to prevent the operation drive portion from rotating about the axis.

5. A machine tool, comprising:
a main spindle that is configured to grip a workpiece;
the tool base according to any one of claims 1 to 4; and
a control portion that is configured to control the main spindle and the tool base,
wherein the control portion is further configured to stop the operation drive portion at a position separated from the attachment/detachment operation portion, at a position at which the tool is attachable to and detachable from the tool holding portion, and at a position at which the operation drive portion is in contact with the attachment/detachment operation portion to prevent rotation of the attachment/detachment operation portion.
